# EUROPÄISCHE PATENTANMELDUNG

(11) **EP 0 733 899 A2**
(43) Veröffentlichungstag der Anmeldung: **25.09.1996**
(21) Anmeldenummer: 96101155.8
(22) Anmeldetag: 27.01.1996
(51) Int. Cl.: G01N 27/416

(54) **Verfahren zur Zustandsbestimmung eines elektrochemischen Gassensors**

(30) Priorität: 23.03.1995 DE 19510574
(71) Anmelder: TESTO GmbH & Co., D-79853 Lenzkirch (DE)
(72) Erfinder: Demisch, Ullrich, Dr., D-79102 Freiburg (DE); Pahlke, Jörg, D-79822 Titisee-Neustadt (DE); Ziegler, Peter, D-79853 Lenzkirch (DE)
(74) Vertreter: Patentanwälte Westphal, Buchner, Mussgnug Neunert, Göhring

(57) **Zusammenfassung**

Die Erfindung betrifft ein Verfahren zur Zustandsbestimmung eines amperometrischen elektrochemischen Gassensors, der sich in einer Umgebung mit bekannter und konstanter Konzentration eines nachzuweisendes Gases befindet, welches nachzuweisende Gas an einer von einer Meßelektrode, einem Elektrolyten und dem nachzuweisenden Gas gebildeten Dreiphasengrenze durch chemische Reaktion umgesetzt wird und ein dabei in einem externen Stromkreis abfließender Strom als Sensorsignal dient, wobei zur Bestimmung des Zustandes des Gassensors der externe Stromkreis zeitweise unterbrochen wird und während dieser Zeit der Gassensor mit dem nachzuweisenden Gas definiert beaufschlagt wird sowie nach Schließen des externen Stromkreises die resultierende Transiente des Sensorsignals erfaßt und ausgewertet wird.

## Beschreibung

Die Erfindung betrifft ein Verfahren zur Zustandsbestimmung eines elektrochemischen Gassensors, der sich in einer Umgebung mit bekannter und konstanter Konzentration eines nachzuweisenden Gases befindet, welches nachzuweisende Gas an einer von einer Meßelektrode, einem Elektrolyten und dem nachzuweisenden Gas gebildeten Dreiphasengrenze durch chemische Reaktion umgesetzt wird und ein dabei in einem externen Stromkreis abfließender Strom als Sensorsignal dient.

Elektrochemische Gassensoren sind bekannt. Es handelt sich dabei um amperometrisch arbeitende, diffusioskontrollierte galvanische Brennstoffzellen, bei denen durch eine chemische Reaktion das nachzuweisende Gas an einer Dreiphasengrenze Gas - Meßelektrode - Elektrolyt umgesetzt wird. Der dabei in einem externen Stromkreis abfließende elektrische Strom dient als Sensorsignal.

Der zur Ausgleichsreaktion benötigte Reaktionspartner kann ein Gas sein und ebenfalls in den Sensor hineindiffundieren, wie z.B. O₂ beim CO-Sensor, oder er dient als Gegenelektrode und ist bereits im Sensor gespeichert, wie z.B. Pb beim O₂-Sensor.

Im letztgenannten Fall ist die Lebensdauer des Sensors wesentlich dadurch begrenzt, daß bei zunehmendem Verbrauch der Gegenelektrode oder infolge zunehmender Belegung der Gegenelektrode mit Reaktionsprodukten die Ausgleichsreaktion nicht mehr ablaufen kann. Das daraus resultierende rasche Absinken in der Empfindlichkeit findet in einem Bruchteil der Gesamtlebensdauer statt.

Mit fortschreitendem Lebensalter läßt die Empfindlichkeit zwar aufgrund verschiedener Degradationsprozesse im Sensorinneren etwas nach, der Zeitpunkt des rapiden Abfalls des Sensorsignals am Ende der Lebensdauer läßt sich durch Beobachtung und Kontrolle der Empfindlichkeit allein aber nicht sicher vorhersagen.

Um nun den Ausfall eines Sensors infolge Alterung rechtzeitig zu erkennen, bedarf es geeigneter Kriterien, die hierüber Aufschluß und einen Hinweis auf den aktuellen Verbrauchszustand des Sensors geben.

So ist aus der DE 34 18 034 C2 ein Verfahren zur Kontrolle eines membranbedeckten polarographischen Sensors bekannt, bei dem zur Kontrolle der Änderung des Elektrolyten die Potentialdifferenz zwischen Meß- und Gegenelektrode durch Einsatz einer zusätzlichen Elektrode überwacht und als Maß für die Beurteilung der Funktion des Sensors herangezogen wird.

Es wird also im Stand der Technik bei elektrochemischen Gassensoren die momentane Sensorempfindlichkeit mit derjenigen kurz nach Herstellung des Sensors verglichen. Ist der Empfindlichkeitsverlust zu groß geworden, tauscht man den Sensor aus. Diese Verfahrensweise bietet zwar einige Gewähr dafür, daß die eingesetzten Sensoren jeweils funktionsfähig sind, doch führt der recht pragmatisch vorgesehene Austausch von Sensoren zu nicht unbeträchtlichen Aufwendungen, da sicherheitshalber eher zu früh als mit Erreichen eines unzulässigen Alterungszustandes der Austausch erfolgt.

Aus WO 92/21962 ist ein Verfahren zur Überwachung der Funktionsfähigkeit von pH-Sonden bekannt, bei dem in Amplitude und Dauer variable Rechteckimpulse auf eine im Meßmedium eintauchende Meßsonde gegeben werden und die durch die Sondenimpedanz veränderte Spannung gemessen und mit dem Sollwert für eine intakte Sonde verglichen wird.

Ein ähnliches Verfahren, das zur fortlaufenden Überwachung eines Elektrodensystems für potentiomerische Messungen dient, ist aus der EP 04 19 769 A2 bekannt. Dabei erfolgt die Überwachung der mittels symmetrischer bipolarer Stromimpulse, mit denen die Elektroden beaufschlagt werden. Die hierdurch hervorgerufene Sannungsänderung wird ebenfalls mit einem rechnerisch oder experimentell ermittelten Sollwert verglichen. Weitere potentiometrisch arbeitende Gassensoren sind aus der US 41 89 367 A1 und EP 02 41 601 A1 bekannt.

Ausgehend von diesem Stand der Technik ist es daher Aufgabe der Erfindung, ein Verfahren der eingangs genannten Art zu schaffen, mit welchem der Zeitpunkt für den alterungsbedingten Austausch möglichst zutreffend ermittelt werden kann, um so eine möglichst lange sichere Nutzungsdauer des Gassensors zu erhalten, und das sich durch einfache Handhabbarkeit im Sinne einer benutzerfreundlichen Durchführung auszeichnet.

Diese Aufgabe wird erfindungsgemäß durch die kennzeichnenden Merkmale des Patentanspruchs 1 gelöst. Dementsprechend ist vorgesehen, daß zur Bestimmung des Zustandes des Gassensors der externe Stromkreis zeitweise unterbrochen oder geöffnet wird, daß während dieser Zeit der Gassensor mit dem nachzuweisenden Gas definiert beaufschlagt wird und daß nach Schließen des externen Stromkreises der zeitliche Verlauf des Sensorsignals erfaßt und ausgewertet wird.

Ausgangspunkt für die erfindungsgemäße Verfahrensweise ist die Überlegung, daß auch bei Unterbrechung des Stromkreises die elektrochemische Umsetzung unter Produktion von Elektronen und Ionen vorläufig aufrechterhalten wird. Da die Elektronen nicht abfließen können, polarisieren sie die Elektroden. Der chemische Prozeß kommt zum Erliegen, wenn die Polarisierung der Elektroden einen weiteren Ionenfluß im Elektrolyten verhindert. Der Zeitpunkt, wann dieser Punkt erreicht wird, ist abhängig von der verbliebenen Aktivität der Meßelektrode sowie von der Zahl der für die Ausgleichsreaktion zur Verfügung stehenden Plätze an der Gegenelektrode und dem Zustand des Elektrolyten, das heißt, insgesamt von den Aktivitätsreserven des Sensors.

In einem mikroskopischen Modell sind bei vollständiger Polarisierung alle Katalysezentren an der oder den Oberflächen der Elektroden mit Gasmolekülen belegt, die quasi darauf warten, in Lösung zu gehen und zum Stromfluß beizutragen. In diesem Zustand ist das Sensorinnere von der Diffusionsbarriere bis zur Meßelektrode gesättigt mit dem nachzuweisenden Gas, während beim normalen diffusionslimitierten Betrieb die Gaskonzentration an der Meßelektrode gegen Null geht.

In vorteilhafter Weiterbildung des erfindungsgemäßen Verfahrens kann darüber hinaus vorgesehen sein, daß der Gassensor während der Unterbrechung des externen Stromkreises mit dem nachzuweisenden Gas in konstanter Konzentration beaufschlagt wird.

Eine weitere bevorzugte Ausgestaltung des erfindungsgemäßen Verfahrens sieht vor, daß für die Beurteilung des aktuellen Zustandes des elektrochemischen Gassensors der Spitzenwert des Signals nach dem Wiederanschluß zugrunde gelegt wird.

Entsprechend weiterer Ausgestaltungen der Erfindung kann für die Beurteilung des aktuellen Zustandes des elektrochemischen Gassensors zusätzlich oder alternativ die Steigung des Signalabfalls kurz nach Wiederanschluß und/oder die Dauer für die Stabilisierung des Signals zugrunde gelegt werden. Das heißt, daß in bestimmten Fällen alle aufgezeigten Kriterien gemeinsam oder alternativ einzeln jeweils für sich zur Anwendung kommen.

Entsprechend einer weiteren Ausführungsform der Erfindung ist das Verfahren zur Überwachung sämtlicher elektrochemischer Gassensoren geeignet unabhängig davon, ob die zu überprüfenden Sensoren Sauerstoff -Sensoren mit oder ohne inneren Lastwiderstand sind oder Sensoren für gelösten Sauerstoff beziehungsweise Sensoren für toxische Gase.

Diese und weitere in der Beschreibung eines Ausführungsbeispiels geschilderten Merkmale des erfindungsgemäßen Verfahrens sind Gegenstand der Unteransprüche.

Anhand eines Ausführungsbeispieles sollen die Erfindung, vorteilhafte Ausgestaltungen der Erfindung sowie besondere Vorteile der Erfindung näher erläutert und beschrieben werden. Es zeigen
- Fig. 1: den Zusammenhang zwischen dem Alterungsgrad und der Stabilislerungsdauer für die untersuchten Sensoren, und
- Fig. 2: den Zusammenhang zwischen dem Signalspitzenwert und der Stabilisierungsdauer für die untersuchten Sensoren.

Die folgenden Ausführungen beziehen sich auf einen elektrochemischen Gassensor, der von einem nachzuweisenden Gas beaufschlagt wird. Wenn sich der Sensor in einer Umgebung befindet, die das nachzuweisende Gas in konstanter und bekannter Konzentration enthält, wird der externe Strom kreis für eine bestimmte Zeit unterbrochen und anschließend wieder geschlossen. Man beobachtet den zeitlichen Verlauf des Sensorsignals nach Wiederanschluß und wertet diesen aus.

Auch bei Unterbrechung des Stromkreises wird vorläufig die elektrochemische Umsetzung unter Produktion von Elektronen und Ionen aufrechterhalten. Da die Elektronen nicht abfließen können, polarisieren sie die Elektroden. Der chemische Prozeß kommt zum Erliegen, wenn die Polarisierung der Elektroden einen weiteren Ionenfluß im Elektrolyten verhindert. Wann dieser Punkt erreicht wird, ist abhängig von der verbliebenen Aktivität der Meßelektrode, weiterhin von der Zahl der für die Ausgleichsreaktion zur Verfügung stehenden Plätze an der Gegenelektrode und dem Zustand des Elektrolyten, insgesamt also von den Aktivitätsreserven des Sensors.

In einem mikroskopischen Modell sind bei vollständiger Polarisierung alle Katalysezentren an der oder den Oberflächen der Elektroden mit Gasmolekülen belegt, die quasi darauf warten, in Lösung zu gehen und zum Stromfluß beizutragen. In diesem Zustand ist das Sensorinnere von der Diffusionsbarriere bis zur Meßelektrode gesättigt mit dem nachzuweisenden Gas, während beim normalen diffusionslimitierten Betrieb die Gaskonzentration an der Meßelektrode gegen Null geht.

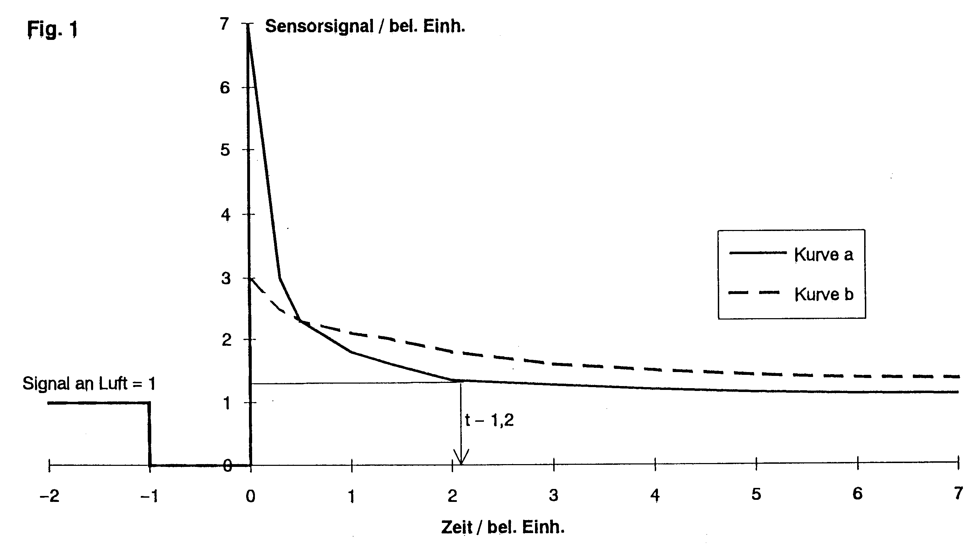

Nach Wiederanschluß mißt man ein hohes Signal und anschließend eine Signalstabilisierung im Ausgangszustand. Dieses Verhalten ist in Fig. 1 sinngemäß dargestellt. Je nach Art und Verbrauchszustand des Sensors unterscheidet sich diese Signaltransiente.

Bei vielen Sensortypen, wie z.B. dem Kohlenmonoxid-Sensor, läuft die Ausgleichsreaktion mittels eindiffundierenden Luftsauerstoffs ab. Das Reaktionsprodukt ist ein Gas, das dem Sensor entweicht. Dabei handelt es sich um Kohlendioxid für das Beispiel Kohlenmonoxid-Sensor. Hierbei ist der Zustand der Elektroden entscheidend. Mikroskopisch betrachtet ist die Signalhöhe nach Wiederanschluß korreliert mit der Anzahl der noch aktiven Katalysezentren; diese wiederum nehmen mit zunehmendem Sensoralter aufgrund verschiedener Degradationseffekte in ihrer Zahl ab.

Die Dauer, die für die Signalstabilisierung benötigt wird, ist ein Maß für die Geschwindigkeit, mit der die Gasmoleküle, die sich im Sensorinneren vor der Meßelektrode angesammelt haben, abgebaut werden können, bis der diffusionslimitierte Arbeitszustand wiederhergestellt ist. Der Abbau geschieht durch Diffusion eines Moleküls zu einem nicht belegten Katalysezentrum und anschließender elektrochemischer Umsetzung. Mit zunehmender Degradation nimmt die Anzahl der Katalysezentren ab, wodurch dieser Prozeß verlangsamt wird und gleichzeitig die Dauer für die Signalstabilisierung steigt.

Bei Sensoren, wie einem Zweielektroden-Sauerstoff-Sensor, bei dem Blei als Reaktionspartner im Sensor gespeichert ist und das Reaktionsprodukt Bleioxid im Sensor verbleibt, ist, wie oben geschildert, der Grad der Belegung der Gegenelektrode mit Reaktionsprodukten entscheidend. Mit zunehmendem Belegungsgrad verringert sich die Anzahl der Plätze, an denen die Gegenreaktion ablaufen kann, bis dies zum limitierenden Faktor für den Gesamtprozeß wird.

Je weiter also die Alterung eines Sensors vorangeschritten ist, desto kleiner fällt die Signalspitze bei Wiederanschluß aus und desto längere Zeit wird zur Stabilisierung benötigt. Sinngemäß ist dies in Fig. 1 dargestellt, wobei die Kurve a das Verhalten eines unverbrauchten und die Kurve b das Verhalten eines verbrauchten Sensors beschreibt. Dies bedeutet, daß die Höhe der Signalspitze und die Stabilisierungsdauer als Kriterien für eine Zustandsdiagnose des Sensors herangezogen werden können.

Als ein weiteres Kriterium, das gegebenenfalls zur Auswertung herangezogen werden kann, kommt die Steigung, mit der das Signal kurz nach Wiederanschluß abfällt, in Betracht.

Es wurden Sauerstoff-Sensoren nach der beschriebenen Methode mit Umgebungsluft mit konstanter Sauerstoffkonzentration als dem nachzuweisenden Gas untersucht. Von diesen Sensoren war das jeweilige stabile Signal an Luft zum Untersuchungszeitpunkt und kurz nach Herstellung bekannt, somit also der Empfindlichkeitsverlust über der bisherigen Lebensdauer. Bei den untersuchten Sensoren lag der Verlust in einem Bereich zwischen 7% und 50 %, mit einer Häufung bei ca. 20 %.

In Fig. 1 sind die Transienten für unterschiedlich stark verbrauchte Sensoren aufgezeichnet. Die Transiente setzt sich jeweils zusammen aus der Peakhöhe kurz nach dem Einschalten und dem anschließendem Absinken des Sensorsignals, das zeitlich ausgewertet wird.

Mit zunehmender Unterbrechungsdauer ist für die Signalspitze und die Stabilisierungszeit eine Sättigung zu beobachten. Als Standard wurde eine Unterbrechungsdauer von 60 s (Sekunden) gewählt.

Bei einer Unterbrechungsdauer von 60 s variierte die Signalspitze nach Wiederanschluß zwischen 1,64 und 6,67 mA; bezogen auf das jeweilige Signal an Luft waren dies das 5,5- bzw. 18,6 fache. Als Stabilisierungsdauer wurde die Zeit gewählt, die zum Abklingen auf das 1,2 fache des stabilen Signals an Luft benötigt wurde ("t - 1,2", siehe auch Fig.1). Hier lagen die gemessenen Werte im Bereich von 14 bis 46 s.

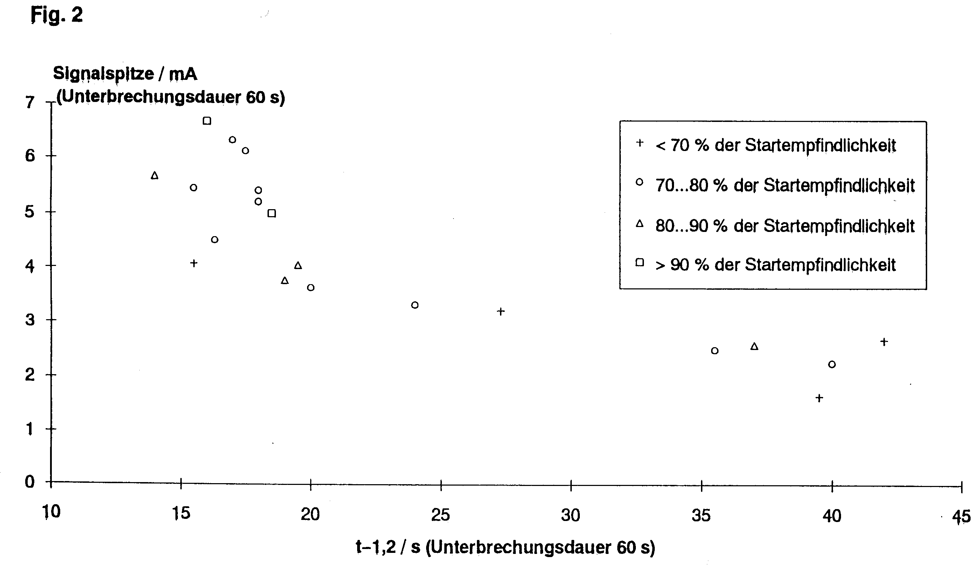

In Fig. 2 ist der Zusammenhang zwischen dem Signalspitzenwert und der Stabilisierungsdauer für die untersuchten Sensoren dargestellt. Als Parameter dient der Empfindlichkeitsverlust über der bisherigen Lebensdauer. Diese Ergebnisse zeigen, daß je nach Verbrauchszustand der Sensoren gut unterscheidbare Ergebnisse erzielt werden können und eine Klassifizierung in wenig, mittel und stark gealterte Sensoren möglich ist.

Ziel dieser Untersuchungen war es, im Display eines Gasanalyse-Gerätes sichtbar zu machen, in welchem Versuchszustand sich ein elektrochemischer Gassensor bestimmten Alters - zunächst hier besonders der Sauerstoffsensor - befindet.

Zu diesem Zweck wurden zahlreiche Sauerstoffsensoren getestet, die in Rauchgas-Meßgeräten eingesetzt worden waren. Dabei wurde ein wenig aufwendiges elektrisches Diagnoseverfahren erfunden, das es gestattet, festzustellen, wann, bzw. ob ein Sauerstoffsensor schon ausgewechselt werden muß.

Für die Durchführung der Diagnose braucht der Sensor nicht ausgebaut zu werden. Stattdessen dient eine kleine Schaltung dafür, daß auf Tastendruck der externe Stromkreis am Sensor für eine kurze Zeit unterbrochen wird und anschließend wieder geschlossen wird. Beim Schließen des Stromkreises zeigt der Sensor eine typische "Transiente". Bei der Auswertung zahlreicher Transienten wurde ein zuverlässiges Kriterium gefunden, das sichere Aussagen über den Verbrauchszustand des Sensors zuläßt im Gegensatz zu den bisher bekannten recht ungenauen Parametern Empfindlichkeitsverlust und Herstelldatum. Daher ist es nicht mehr erforderlich, diese bisher verwendeten Kriterien für eine Beurteilung zugrundezulegen.

Weitere Anwendungsmöglichkeiten für das erfindungsgemäße Verfahren finden sich bei kommerziellen Sensoren, bei denen der Lastwiderstand im Sensor integriert ist und als Sensorsignal eine Spannung statt eines Stromes gemessen wird. Hier ist eine Unterbrechung des elektrischen Stromkreises nicht möglich. In diesem Fall können die elektrochemischen Prozesse im Sensor unterdrückt werden, indem man dem Sensor eine geeignete Spannung aufprägt: dies entspricht dem Unterbrechen eines externen Stromkreises.

Auch bei den häufig eingesetzten Drei-Elektroden-Sensoren für toxische Gase (mit einer dritten Referenzelektrode zur Stabilisierung des Potentials der Gegenelektrode) kann das Verfahren angewendet werden. Voraussetzung ist, daß der Sensor mit dem nachzuweisenden toxischen Gas konstanter und bekannter Konzentration beaufschlagt wird und der Stromkreis durch eine geeignete Maßnahme unterbrochen wird.

So kann diese Erfindung beispielsweise für die Diagnose von Sauerstoffsensoren in Rauchgasanalyse-Geräten angewendet werden. Dabei führt die Anwendung des erfindungsgemäßen Verfahrens dazu, daß die Sauerstoffsensoren erheblich länger genutzt werden können, als dies bisher der Fall war, beziehungsweise dazu, daß - nicht mehr wie bisher - die Überprüfung der eingeschickten Geräte ergibt, daß die Sauerstoffsensoren gar nicht mehr funktionieren. In Anwendung des erfindungsgemäßen Verfahrens kann dies sicher ausgeschlossen werden, da der Funktionsverlust angezeigt wird

## Patentansprüche

1. Verfahren zur Zustandsbestimmung eines amperometrischen elektrochemischen Gassensors, der sich in einer Umgebung mit bekannter und konstanter Konzentration eines nachzuweisenden Gases befindet und in einen Stromkreis ein Sensorsignal liefert, dadurch gekennzeichnet, daß zur Bestimmung des Zustandes des Gassensors der Stromkreis zeitweise unterbrochen wird, daß während dieser Zeit der Gassensor mit dem nachzuweisenden Gas definiert beaufschlagt wird und daß nach Schließen des Stromkreises der zeitliche Verlauf des Sensorsignals erfaßt und ausgewertet wird.

2. Verfahren nach Anspruch 1, dadurch gekennzeichnet, daß der Gassensor während der Unterbrechung des Stromkreises mit dem nachzuweisenden Gas konstanter Konzentration beaufschlagt wird.

3. Verfahren nach Anspruch 1 oder 2, dadurch gekennzeichnet, daß für die Beurteilung des aktuellen Zustandes des elektrochemischen Gassensors der Spitzenwert des Signals nach dem Wiederanschluß zugrundegelegt wird.

4. Verfahren nach Anspruch 3, dadurch gekennzeichnet, daß für die Beurteilung des aktuellen Zustandes des elektrochemischen Gassensors zusätzlich oder alternativ die Steigung des Signalabfalls kurz nach Wiederanschluß herangezogen wird.

5. Verfahren nach Anspruch 3, dadurch gekennzeichnet, daß für die Beurteilung des aktuellen Zustandes des elektrochemischen Gassensors zusätzlich oder alternativ die Dauer für die Stabilisierung des Signals zugrunde gelegt wird.

6. Verfahren nach einem der Ansprüche 3 bis 5, dadurch gekennzeichnet, daß für die Beurteilung des aktuellen Zustandes des elektrochemischen Gassensors eine Kombination der folgenden Kriterien, nämlich die Steigung des Signalabfalls kurz nach Wiederanschluß, die Dauer für die Stabilisierung des Signals sowie der Spitzenwert des Signals nach dem Wiederanschluß zugrunde gelegt wird.

7. Verfahren nach einem der vorherigen Ansprüche, dadurch gekennzeichnet, daß es für Sauerstoff-Sensoren mit internem Lastwiderstand anwendbar ist.

8. Verfahren nach einem der vorherigen Ansprüche, dadurch gekennzeichnet, daß es für Sauerstoff-Sensoren ohne internen Lastwiderstand anwendbar ist.

9. Verfahren nach einem der vorherigen Ansprüche, dadurch gekennzeichnet, daß es für Sauerstoff-Sensoren für gelösten Sauerstoff anwendbar ist.

10. Verfahren nach einem der vorherigen Ansprüche, dadurch gekennzeichnet, daß es für toxische Gassensoren anwendbar ist.
